# EUROPEAN PATENT APPLICATION

(11) **EP 0 671 631 A2**
(43) Date of publication of application: **13.09.1995**
(21) Application number: 95301348.9
(22) Date of filing: 02.03.1995
(51) Int. Cl.: G01R 31/00

(54) **Vehicle diagnostic apparatus**

(30) Priority: 07.03.1994 GB 9404335
(71) Applicant: RAC Motoring Services Limited, Brent Terrace, London NW2 1BX (GB)
(72) Inventor: Jones, Christopher, Bridgnorth, Shropshire WV16 6PH (GB)
(74) Representative: Watts, Peter Graham

(57) **Abstract**

A vehicle diagnostic apparatus includes at least one electrical control unit (11) with means to produce fault codes indicative of malfunction of the systems controlled thereby, the electronic control unit (11) being connected to a recording unit (10) by which the fault codes generated by the electronic control unit (11) may be written on to a smart card (20) a tone generator (28) and sounder (29) are provided on the smart card (20) by means of which fault codes may be transmitted via a telephone network.

## Description

The present invention relates to vehicle diagnostic apparatus and in particular to diagnostic apparatus suitable for use by roadside repair organisations.

Modern motor vehicles may include several electronic control units (ECU's) to control, for example, the ignition, fuel, braking and lighting systems of the vehicle. These ECU's may have self diagnostic capabilities which will produce fault codes when something goes wrong with the systems they control. These fault codes are used by garage based diagnostic equipment, during the service or repair of vehicles, in order to expedite the location of faults.

While the roadside repair vehicle may be equipped with such diagnostic equipment, it would be convenient if advanced information could be obtained as to the probable cause of the breakdown so that a repair vehicle or recovery vehicle could be sent, as appropriate. Also if a roadside repair will require particular parts it would be possible to ensure that the necessary parts are available.

According to one aspect of the present invention, a vehicle diagnostic apparatus comprises at least one electronic control unit with means to produce fault codes indicative of the malfunction of the system controlled by the electronic control unit, characterised in that the electronic control unit is connected to a recording unit by which fault codes generated by the electronic control unit may be written to an independent programmable element, means being provided by which fault codes written to the independent programmable element may be transmitted via a telephone network.

With the apparatus according to the present application, normally the independent programmable element will be located in the recording unit within the vehicle. When a system controlled by an ECU connected to the recording unit fails and the ECU generates a fault code, the fault code is written to the independent programmabale element. The stranded motorist may then remove the independent programmable element from the recording unit and transmit the fault code loaded thereon, to the roadside repair organisation, by the telephone network. The repair organisation can then determine the meaning of the fault code and can advise the roadside mechanic accordingly.

The independent programmabale element will preferably be in the form of a 'smart card' which may be of the dimensions of a conventional credit card. The programmable element will include processing means, memory, a power source and means for inputting data.

The memory will include random access memory onto which the fault codes and other data may be written. Permanent data, for example relating to details of the vehicle and membership information, may also be stored in the memory.

The input means may be in the form of photo-electric detectors which may react to LEDs or other light sources driven by the recording unit, magnetic detectors which will react to a magnetic source driven by the recording unit or may be formed by direct electrical connections with the recording unit.

The independent programmable element may also include tone generating means, a sounder and switch means, by which audible tones corresponding to the information loaded into the memory may be produced, so that the tones may be transmitted by telephone line.

Alternatively, a portable reader/tone generator may be used in conjunction with the independent programmable element to generate audible tones.

According to a further embodiment of the invention, the codes on the independent programmable element may be read by passing the element through a magnetic reader such as those found on some public pay phones.

In addition to fault codes, other information generated by the vehicle systems may be written to the independent programmable element, so that they may also be transmitted to the roadside repair organisation. For example, if the vehicle is fitted with a navigational system, data relating to the vehicle's location may also be recorded and transmitted to the roadside repair organisation.

The power source on the independent programmable element should preferably be re-chargeable and may also include photo-electric elements.

Data may be transmitted to the roadside repair organisation by mobile, public or private telephone.

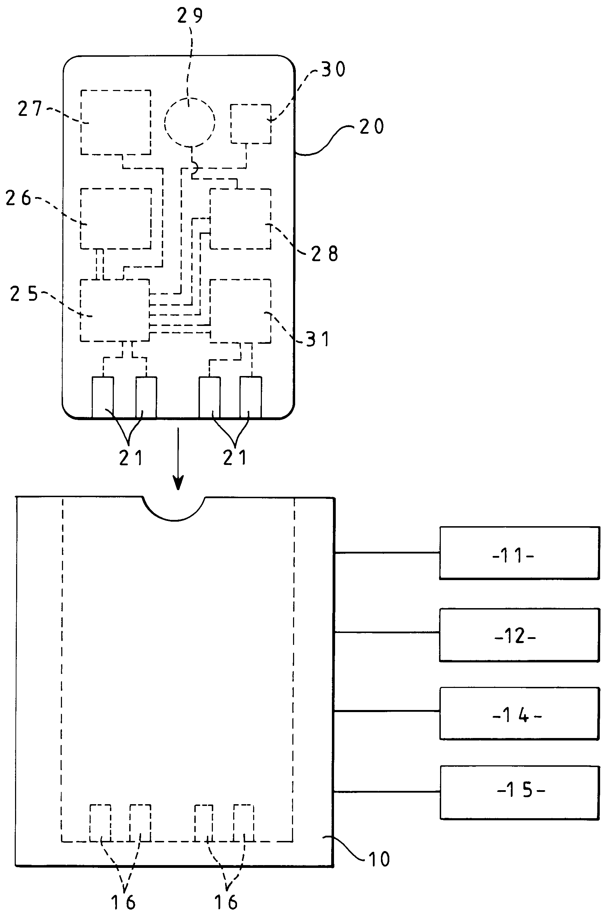

An embodiment of the invention is now described, by way of example only, with reference to the accompanying drawing which illustrates diagramatically a vehicle diagnostic apparatus in accordance with the present invention.

As illustrated in the accompanying drawing, a diagnostic apparatus for a motor vehicle comprises a recording unit 10 which has inputs from ECU's 11 and 12 controlling, for example, the engine management control system and braking system of the vehicle. ECU's 11, 12 have means for generating fault codes indicative of the malfunctioning of the systems which they control. The fault codes generated by the ECU's 11, 12 are transmitted to the recording unit 10 by the connections therewith. A vehicle navigational system 14 is also connected to the recording unit 10 and transmits data to the recording unit 10 relating to the location of the vehicle at any given time. The recording unit 10 is also connected to the vehicle power supply 15.

The recording unit 10 has a slot for insertion of a smart card 20, electrical contacts 16 on the recording unit 10 engaging corresponding contacts 21 on the smart card 20.

The smart card 20 is a plastic card of similar dimensions to a credit card and contains integrated circuitry. The circuitry includes a central processor 25, random access memory 26, read only memory 27, a tone generator 28, sounder 29, touch switch 30 and rechargeable power source 31.

When the smart card 20 is located in the recording unit 10, the rechargeable power source 31 is connected to the vehicle power source 15 by means of contacts 16, 21. Data received from the ECU's 11, 12 and navigational system 14 is also transmitted to the central processor 25 by means of the electrical contacts 16, 21. The data is written by the central processor 25 to the random access memory 26. The memory 26 may also be preprogrammed with permanent data relating to the vehicle to which the apparatus is fitted and membership details of the motorist. The read only memory 27 is programmed with the operating programme for the smart card 20.

Upon breakdown of the vehicle, the smart card 20 may be removed from the recording unit 10 and may be held against the mouthpiece of a telephone. Actuation of a switch 30 will then cause the tone generator 28 and sounder 29 to generate audible tones corresponding to the fault codes, location data and permanent data stored in the random access memory 26. These audible tones may be transmitted by telephone to a roadside repair organisation, where they may be deciphered and a repair mechanic may be despatched to the appropriate location with advance information as to the problem with the vehicle.

## Claims

1. A vehicle diagnostic apparatus comprising at least one electronic control unit (11, 12) with means to produce fault codes indicative of the malfunction of the system controlled by the electronic control unit (11, 12), characterised in that the electronic control unit (11, 12) is connected to a recording unit (10) by which fault codes generated by the electronic control unit (11, 12) may be written to an independent programmable element (20), means (28, 29) being provided by which fault codes written to the independent programmable element (20) may be transmitted via a telephone network.

2. A vehicle diagnostic apparatus according to Claim 1 characterised in that the independent programmable element (20) includes processing means (25), memory (26, 27), a power source (31) and means for inputting data (16).

3. A vehicle diagnostic apparatus according to Claim 2 characterised in that the memory (26, 27) includes random access memory (26) onto which fault codes and other data from the vehicle systems may be written.

4. A vehicle diagnostic apparatus according to Claim 2 or 3 characterised in that permanent data relating to the vehicle and/or motorist may be stored in the memory (26, 27).

5. A vehicle diagnostic apparatus according to any one of Claims 2 to 4 characterised in that the input means comprises photoelectric means, magnetic means or direct electrical contacts (16).

6. A vehicle diagnostic apparatus according to any one of Claims 2 to 5 characterised in that the power source (30) is rechargeable.

7. A vehicle diagnostic system according to any one of the preceding claims characterised in that the independent programmable element (20) includes tone generating means (28) by which the data recorded thereon may be transmitted by a telephone network.

8. A vehicle diagnostic apparatus according to any one of the preceding claims characterised in that a plurality of electronic control units (11, 12) with means for producing fault codes are connected to the recording unit (10).

9. A vehicle diagnostic apparatus according to any one of the preceding claims characterised in that an onboard navigational system (14) is connected to the recording unit (10), to provide data relating to the location of the vehicle when broken down.
